# EUROPÄISCHE PATENTANMELDUNG

(11) **EP 3 644 571 A1**
(43) Veröffentlichungstag der Anmeldung: **29.04.2020**
(21) Anmeldenummer: 18201987.7
(22) Anmeldetag: 23.10.2018
(51) Int. Cl.: H04L 29/06, H04L 9/32, H04L 9/08, G06F 8/65

(54) **VERFAHREN ZUR NUTZUNGSBESCHRÄNKUNG EINES GERÄTE-AUTHENTISIERUNGSNACHWEISES**

(71) Anmelder: Siemens Aktiengesellschaft, 80333 München (DE)
(72) Erfinder: Falk, Rainer, 85586 Poing (DE)

(57) **Zusammenfassung**

Verfahren zur Nutzungsbeschränkung eines Geräte-Authentisierungsnachweises (aDC) eines Gerätes (10) bei einem Verbindungsaufbau zu einem Kommunikationspartner (20), wobei das Gerät (10)
- eine erste kryptographisch geschützte Kommunikationsverbindung (30) basierend auf einer einseitigen Authentifizierung des Kommunikationspartners (20) abhängig von einem Kommunikationspartner-Authentisierungsnachweis (aPC) aufbaut (S1),
- mindestens einen in dem Kommunikationspartner-Authentisierungsnachweis (aPC) enthaltenen Kommunikationspartner-Authentisierungsparameter (f1, f2) gegenüber einer vorgegebenen Parameterregel (PR) überprüft (S2), und
- den Gerät-Authentisierungsnachweis (aDC) nur dann zur Authentifizierung des Gerätes (10) an den Kommunikationspartner (20) übermittelt (S3), wenn der mindestens eine überprüfte Kommunikationspartner-Authentisierungsparameter (f1, f2) der vorgegebenen Parameterregel (PR) entspricht.

## Beschreibung

Die Erfindung betrifft ein Verfahren zur Nutzungsbeschränkung eines Geräte-Authentisierungsnachweises eines Gerätes bei einem Verbindungsaufbau zu einem Kommunikationspartner. Die Erfindung betrifft des Weiteren ein entsprechendes Gerät, einen Kommunikationspartner-Vorrichtung sowie ein Computerprogrammprodukt, die derart ausgebildet sind, das Verfahren durchzuführen.

Geräte, die beispielsweise in einem Internet der Dinge (Internet of Things) kommunizieren, werden häufig bereits bei der Herstellung mit einem kryptografischen Schlüssel oder digitalen Zertifikat konfiguriert, damit sich das Gerät als genau dieses Gerät authentisieren kann. Ein solcher kryptografischer Schlüssel bzw. ein solches digitales Zertifikat wird häufig als Geräteschlüssel bzw. Gerätezertifikat oder allgemein als Geräte-Authentisierungsberechtigungsnachweis, im Weiteren kurz als Geräte-Authentisierungsnachweis, bezeichnet. Solche Geräteauthentisierungsschlüssel bzw. Gerätezertifikate weisen häufig eine Gültigkeitsdauer von 10 bis 20 Jahren auf, die die gesamte Lebensdauer des Gerätes abdeckt.

Ein solcher Geräte-Authentisierungsnachweis wird insbesondere verwendet, um ein Einrichten eines Betreiberschlüssels, den der Betreiber zum Betrieb des Gerätes verwenden möchte, zu automatisieren. Das Einrichten des Betreiberschlüssels wird bevorzugt bei der Inbetriebnahme des Geräts durchgeführt. Dazu kann sich das Gerät beispielsweise mittels einer Zertifikatanfrage oder einen Zugriff auf einen Webservice, beispielsweise einen Internet of things Backendserver, authentisieren. Dabei wird Information aus dem Gerätezertifikat, beispielsweise Information zum Hersteller, Typ, Seriennummer des zugreifenden Gerätes überprüft. Auch ist es möglich über das Gerätezertifikat ein Gerät als Originalgerät zu authentifizieren.

Betreiberschlüssel oder allgemein operative Schlüssel und Zertifikate weisen im Allgemeinen eine begrenzte Gültigkeitsdauer von beispielsweise ein oder zwei Jahren auf, die vor Gültigkeitsablauf erneuert werden. Eine solche "kurze" Gültigkeitsdauer ist zwar für Betreiberzertifikate und sonstige operative Zertifikate üblich und sinnvoll, für ein Gerätezertifikat bzw. einen Geräteschlüssel aber nicht immer realisierbar.

So kann beispielsweise ein Geräteschlüssel bzw. Gerätezertifikat während der Nutzungsdauer des Gerätes nicht mehr zeitgemäß sein, insbesondere in Bezug auf sich verändernde kryptografische Algorithmen und Protokolle. So kann beispielsweise die Länge des Geräteschlüssels zu kurz sein oder der verwendete kryptografische Algorithmus oder das verwendete Sicherheitsprotokoll neu entdeckte Schwachstellen aufweisen, sodass dieses keinen ausreichenden Schutz mehr gewährleistet. Dagegen können Kommunikationspartner, mit denen das Gerät kommuniziert, aktuelle, verbesserte und somit "stärkere" kryptographische Algorithmen und Sicherheitsprotokolle unterstützen.

Es ist somit die Aufgabe der vorliegenden Erfindung, das Risiko eines ungenügenden Schutzes basierend auf der langen Lebensdauer solcher Geräteschlüssel und -zertifikate zu minimieren, das heißt eine zuverlässige Authentifizierung und Verschlüsselung von Daten basierend auf Geräteschlüsseln und Gerätezertifikaten zu gewährleisten.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Nutzungsbeschränkung eines Geräte-Authentisierungsnachweises eines Gerätes bei einem Verbindungsaufbau zu einem Kommunikationspartner, wobei das Gerät eine erste kryptografisch geschützte Kommunikationsverbindung basierend auf einer einseitigen Authentifizierung des Kommunikationspartners abhängig von einem Kommunikationspartner-Authentifizierungsnachweis aufbaut, mindestens einen in dem Kommunikationspartner-Authentisierungsnachweis enthaltenen Kommunikationspartner-Authentisierungsparameter gegenüber einer vorgegebenen Parameterregel überprüft und den Geräte-Authentisierungsnachweis nur dann zur Authentifizierung des Gerätes an den Kommunikationspartner übermittelt, wenn der mindestens eine überprüfte Kommunikationspartner-Authentisierungsparameter der vorgegebenen Parameterregel entspricht.

Weiterhin ist es möglich, dass das Gerät einen zugeordneten geheimen bzw. privaten kryptographischen Schlüssel verwendet, wenn der mindestens eine überprüfte Kommunikationspartner-Authentisierungsparameter der vorgegebenen Parameterregel entspricht. Auch ist es möglich, dass das Gerät ein Ergebnis, zu dessen Berechnung der geheimen bzw. privaten kryptographische Schlüssel verwendet wurde, nur dann an den Kommunikationspartner übermittelt wird, wenn der mindestens eine überprüfte Kommunikationspartner-Authentisierungsparameter der vorgegebenen Parameterregel entspricht.

Eine kryptographische geschützte Kommunikationsverbindung wird im häufig auch als Tunnel bezeichnet und sind im Weiteren als Synonyme verwendet.

Ein Gerät verwendet somit nur dann den eigenen Geräte-Authentisierungsnachweis, wenn der Kommunikationspartner einen beispielsweise "starken" Authentisierungsnachweis zu seiner Authentifizierung verwendet hat bzw. er sich mittels eines starken Kryptoverfahrens authentisiert hat. Ob es sich um einen "starken" Authentisierungsnachweis des Kommunikationspartners handelt, wird über den Vergleich mit den vorgegebenen Parameterregeln überprüft und festgestellt. So ist es möglich einen Geräte-Authentisierungsnachweis weiterhin sicher und ausreichend geschützt zu verwenden, da dieser lediglich über eine erste kryptografische geschützte Kommunikationsverbindung übermittelt wird, die auf einer Authentifizierung des Kommunikationspartners gemäß den durch die Parameterregel vorgegebenen Mindestanforderungen geschützt ist.

Das Verfahren ist insbesondere für Geräte-Authentisierungsnachweise interessant, da diese häufig eine sehr lange Gültigkeitsdauer aufweisen und somit eventuell nicht mehr den aktuellen Sicherheitsanforderungen genügen.

Im Zuge der Authentifizierung wird üblicherweise auch ein kryptografischer Verbindungsschlüssel vereinbart, der zur Überwachung der Integritätund/oder zur Verschlüsselung der über die Kommunikationsverbindung übertragenen Daten, verwendet wird. Durch die Überprüfung des Kommunikationspartner-Authentisierungsnachweises gegenüber den vorgegebenen Parameterregeln kann somit auch eine Mindestanforderung an einen solchen Verbindungsschlüssel überprüft und durchgesetzt werden. Parameterregeln sind dabei beispielsweise eine Länge des Kommunikationspartner-Authentisierungsnachweises bzw. eines darin enthaltenen kryptografischen Schlüssels, der verwendete Kryptoalgorithmus, Parameter des verwendeten Kryptoalgorithmus wie z.B. Kurvenparameter eines ECC-Kryptoverfahrens (ECC: elliptic curve cryptography) oder auch die Identität des Gerätes, das in einem Kommunikationspartner-Authentisierungsnachweis als Parameter enthalten ist. Diese Identität des Gerätes kann gegenüber einer Positivliste mit erlaubten Identitäten überprüft werden.

Über eine solche überprüfte sichere erste kryptografisch geschützte Kommunikationsverbindung kann das Gerät beispielsweise über eine Aktualisierung seiner Firmware, auch kurz als Firmware-Update bezeichnet, aktualisierte Parameterregel empfangen und somit die Bedingungen, unter denen der Geräte-Authentisierungsnachweis verwendet werden darf, nach Bedarf angepasst werden. Dadurch ist es nicht erforderlich, den Geräte-Authentisierungsnachweis selbst zu aktualisieren. Da ein Firmware-Update auf einer Vielzahl von beispielsweise baugleichen Geräten installiert werden kann, kann somit praktikabel eine langzeittaugliche Sicherheit für die Geräteauthentisierung realisiert werden, die "bei Bedarf" nachgerüstet werden kann. Das Nachrüsten des Authentisierungsnachweises erfolgt aber nur über den Kommunikationspartner, sodass dieser ein starkes Authentisierungsverfahren nach dem jeweils aktuellen Stand der Technik verwenden kann. Das Gerät dagegen kann seine alten, gegebenenfalls "schwachen" kryptografischen Verfahren noch weiterbenutzen. Dazu kann es insbesondere einen Geräte-Authentifizierungsnachweis, der durch den Hersteller bei der Fertigung aufgebracht wurde, über die gesamte Gerätenutzungsdauer verwenden.

In einer vorteilhaften Ausführungsform ist der Geräte-Authentisierungsnachweis ein Gerätezertifikat und/oder ein Geräteschlüssel, der zur Überprüfung von herstellungsspezifischen Merkmalen des Gerätes und/oder der zur Einrichtung eines Betreiber-Berechtigungsnachweises für einen Betreiber des Gerätes an den Kommunikationspartner übermittelt wird.

Solche Geräte-Authentisierungsnachweise, die für die genannten Aktionen verwendet werden, haben üblicherweise eine Gültigkeitsdauer von mehreren Jahren. Während dieser langen Gültigkeitsdauer werden bekannte kryptografische Verfahren oft unsicher und müssen durch verbesserte kryptografische Verfahren oder durch ein Erhöhen der Schlüssellänge von kryptografischen Schlüsseln aktualisiert und damit wieder sicher gemacht werden. Andererseits ist es mit sehr hohem administrativem Aufwand verbunden, einen Geräte-Authentisierungsnachweis auf einer Vielzahl von Geräten auszutauschen. Dies ist häufig nur durch den Hersteller selbst oder manuell durch Wartungspersonal möglich.

In einer vorteilhaften Ausführungsform ist der Kommunikationspartner-Authentisierungsnachweis ein asymmetrischer Authentisierungsnachweis des Kommunikationspartners entsprechend einem asymmetrischen Kryptoverfahren.

Insbesondere werden manche, derzeit breit verwendete asymmetrische kryptographische Verfahren, z.B. RSA oder ECC, langfristig als nicht sicher eingestuft, da solche, insbesondere geheime asymmetrische Schlüssel durch Quantencomputer in annehmbarer Zeit ermittelt und damit gebrochen werden können. Des Weiteren sind asymmetrische Verschlüsselungsverfahren, beispielsweise entsprechend einer Public-Key-Infrastruktur mit einem privaten und einem öffentlichen Schlüssel, derzeit häufig im Einsatz, beispielsweise zum Aufbau einer sicheren Verbindung mittels des Transportschicht-Sicherheitsprotokolls (TLS/SSL).

In einer vorteilhaften Ausführungsform wird die erste kryptografisch geschützte Verbindung entsprechend einem Post-Quanten-geeigneten Kryptoverfahren aufgebaut.

Post-Quanten-geeignete Kryptoverfahren sind beispielsweise NewHope oder NTRUEncrypt.

In einer vorteilhaften Ausführungsform überprüft das Gerät mindestens einen ersten Verbindungsparameter der ersten kryptografisch geschützten Verbindung gegenüber vorgegebenen Tunnelregeln und übermittelt den Geräte-Authentisierungsnachweis nur dann zur Authentifizierung des Gerätes an den Kommunikationspartner, wenn der mindestens eine erste Verbindungsparameter den vorgegebenen Tunnelregeln entspricht. Übermitteln kann dabei bedeuten, dass der Geräte-Authentisierungsnachweis explizit oder eine Referenz darauf an den Kommunikationspartner übertragen wird. Ein Übertragen kann auch bedeuten, dass ein Geräte-Authentisierungsnachweis abhängig von einem dauerhaften Geräte-Authentisierungsnachweis dynamisch gebildet wird und innerhalb eines kryptographischen Authentisierungsprotokolls übertragen wird.

Solche Verbindungsparameter bzw. Tunnelregeln sind beispielsweise die Anzahl der Teilstrecken der ersten Kommunikationsverbindung oder der tatsächliche Verbindungspfad der Kommunikationsverbindung. Die Anzahl der Teilstrecken wird auch als Hop Count bezeichnet, und kann über die Anzahl der Router im Pfad der Kommunikationsverbindung zum Server ermittelt werden. Ein Verbindungspfad, im Englischen auch als "route" bezeichnet, kann beispielweise über den Befehl "Route/Traceroute" abgefragt werden. Somit können Eigenschaften des Tunnels, wie kryptographische geschützte Kommunikationsverbindungen häufig bezeichnet werden, maßgeschneidert verwendet und überwacht werden. Somit kann insbesondere ein sicherer Transport über diese erste kryptografisch geschützte Verbindung gewährleistet werden. Der Geräte-Authentisierungsnachweis wird lediglich über eine den Tunnelregeln entsprechende erste kryptografisch geschützte Verbindung übertragen.

In einer vorteilhaften Ausführungsform wird ein bei der vorangehenden einseitigen Authentifizierung des Kommunikationspartners festgelegter erster Verbindungsschlüssel zum kryptografischen Schutz der ersten Kommunikationsverbindung im Gerät und im Kommunikationspartner zur Übertragung des Geräte-Authentisierungsnachweises verwendet. Somit kann die Authentifizierung des Geräte-Authentisierungsnachweises direkt in der ersten Kommunikationsverbindung durchgeführt werden und erfordert somit keine zusätzlichen Signalisierungsnachrichten. Diese Variante ist besonders bandbreiteneffizient.

In einer vorteilhaften Ausführungsform wird nach der Überprüfung der Kommunikationspartner-Authentisierungsparameter ein zweiter Verbindungsschlüssel zum kryptografischen Schutz der ersten Kommunikationsverbindung im Gerät und im Kommunikationspartner festgelegt.

Dadurch können eventuell bei der Authentifizierung vorgenommene Anpassungen der Verbindungseigenschaften bzw. Verbindungsparameter durch das Festlegen eines zweiten Verbindungsschlüssels berücksichtigt werden. Dazu wird beispielsweise eine nochmalige Kommunikationspartner-Authentifizierung mit einer anschließenden Festlegung des zweiten Verbindungsschlüssels durchgeführt.

In einer vorteilhaften Ausführungsform wird nach der Überprüfung der Kommunikationspartner-Authentisierungsparameter ein dritter Verbindungsschlüssel zum kryptografischen Schutz der ersten Kommunikationsverbindung im Gerät und im Kommunikationspartner unter Verwendung eines aus dem ersten Verbindungsschlüssel (SK1) abgeleiteten Schlüssels festgelegt.

Dadurch ist die Authentifizierung des Gerätes explizit kryptographisch an die erste Kommunikationsverbindung gebunden.

In einer vorteilhaften Ausführungsform wird die kryptografisch geschützte zweite Verbindung durch einen in der kryptografisch geschützten ersten Verbindung verwendeten ersten, zweiten oder dritten Verbindungsschlüssel geschützt oder durch einen vierten Verbindungsschlüssel geschützt, der aus dem zweiten Verbindungsschlüssel abgeleitet oder dem ersten Verbindungsschlüssel und dem zweiten Verbindungsschlüssel abgeleitet ist.

Somit ist der Schutz der zweiten Verbindung an die Parameterregeln des Kommunikationspartner-Authentisierungsnachweises gebunden und stellt somit den durch die Parameterregeln vorgegebenen Mindestschutz bereit.

In einer vorteilhaften Ausführungsform empfängt das Gerät über die kryptografisch geschützte zweite Verbindung eine aktualisierte Parameterregel vom Kommunikationspartner.

So kann eine aktualisierte Parameterregel, beispielsweise als Datenstruktur, innerhalb einer Aktualisierung einer Firmware des Gerätes an das Gerät übermittelt werden und somit neue, zeitgemäße Parameterregeln dem Gerät zuführen. Daraufhin wird das Gerät veranlasst, die aktualisierten Parameterregeln statt der bisherigen Parameterregeln zur Überprüfung der Kommunikationspartner-Authentisierungsparameter zu verwenden.

In einer vorteilhaften Ausführungsform empfängt das Gerät über die kryptografisch geschützte zweite Verbindung einen aktualisierten Geräte-Authentisierungsnachweis vom Kommunikationspartner.

Somit kann auch ein Geräte-Authentisierungsnachweis aktualisiert werden, sprich der bisherige Geräte-Authentisierungsnachweis durch einen neuen Geräte-Authentisierungsnachweis ersetzt werden. Dies erspart eine ansonsten sehr aufwändige Aktualisierung des Geräte-Authentisierungsnachweises beim Hersteller selbst bzw. durch Wartungspersonal.

In einer weiteren vorteilhaften Ausführungsform empfängt das Gerät über die kryptografisch geschützte zweite Verbindung einen weiteren Geräte-Authentisierungsnachweis vom Kommunikationspartner.

In einer vorteilhaften Ausführungsform akzeptiert das Gerät den aktualisierten Geräte-Authentisierungsnachweis nur dann als Ersatz für den vorhandenen Geräte-Authentisierungsnachweis, wenn vorgegebene Nutzungsbedingungen durch das Gerät selbst oder durch den Kommunikationspartner überprüft und erfüllt werden.

Somit kann beispielsweise automatisch ein Post-Quantengeeigneter Geräte-Authentisierungsnachweis auf dem Gerät eingerichtet werden. Dabei kann der alte, eigentlich nicht mehr zeitgemäße Geräte-Authentisierungsnachweis noch sicher verwendet werden, um einen aktualisierten Geräte-Authentisierungsnachweis automatisch auf dem Gerät einzurichten. Dadurch kann das Verfahren auch bei installierten Geräten, beispielsweise Internet-of-Things-Geräte, einfach verwendet werden. Nutzungsbedingungen können beispielsweise das Überprüfen der Firmware-Version sein, oder eine Aktion während des Updates, wie beispielsweise das Drücken eines Schalters oder Tasters oder ein vorher durchgeführter Fabrikreset. Ein zweiter Aspekt der Erfindung betrifft ein Gerät mit einer Nutzungsbeschränkung eines Geräte-Authentisierungsnachweises bei einem Verbindungsaufbau zu einem Kommunikationspartner mit mindestens einem Prozessor, der derart ausgebildet ist, eine kryptografisch geschützte erste Kommunikationsverbindung basierend auf einer einseitigen Authentifizierung des Kommunikationspartners abhängig von einem Kommunikationspartner-Authentisierungsnachweis aufbaut, mindestens einem in dem Kommunikationspartner-Authentisierungsnachweis enthaltenen Kommunikationspartner-Authentisierungsparameter gegenüber einer vorgegebenen Parameterregel überprüft und den Geräte-Authentisierungsnachweis nur dann zur Authentifizierung des Gerätes über die erste Kommunikationsverbindung an den Kommunikationspartner übermittelt, wenn der mindestens eine überprüfte Kommunikationspartner-Authentisierungsparameter der vorgegebenen Parameterregel entspricht.

Ein solches Gerät kann einen Geräte-Authentisierungsnachweis weiterverwenden, auch wenn zur Zeit der Verwendung der Geräte-Authentisierungsnachweis nicht mehr einem aktuell sicheren Kryptoverfahren entspricht. Ein erfindungsgemäßes Gerät kann automatisch einen neuen Geräte-Authentisierungsnachweis anfordern bzw. implementieren oder zumindest Parameterregeln, die der Kommunikationspartner-Authentisierungsnachweis erfüllen muss, anwenden und diese auch bei Bedarf aktualisieren.

Ein dritter Aspekt der Erfindung betrifft einen Kommunikationspartner, der derart ausgebildet ist, das beschriebene Verfahren durchzuführen. Der erfindungsgemäße Kommunikationspartner unterstützt somit eine sichere Verwendung des Geräte-Authentisierungsnachweises, auch wenn dieser nicht mehr den aktuellen gültigen sicheren Kryptoverfahren entspricht.

Ein vierter Aspekt der Erfindung betrifft ein Computerprogrammprodukt, umfassend ein nicht vorübergehendes computerlesbares Medium, das direkt in einen Speicher eines digitalen Computers ladbar ist, umfassend Programmcodeteile, die dazu geeignet sind, die Schritte des beschriebenen Verfahrens durchzuführen.

Sofern es in der nachfolgenden Beschreibung nicht anders angegeben ist, beziehen sich die Begriffe "überprüfen", "aufbauen", "übermitteln", "festlegen" vorzugsweise auf Handlungen und/oder Prozesse und/oder Verarbeitungsschritte die Daten verändern und/oder erzeugen und/oder in andere Daten überführen, wobei die Datei insbesondere als physikalische Größe dargestellt werden oder vorliegen können, beispielsweise als elektrische Impulse. Insbesondere sollte der Ausdruck "Computer", "Prozessor" und "Gerät" möglichst breit ausgelegt werden, um insbesondere alle elektronischen Geräte mit Datenverarbeitungseigenschaften abzudecken. Das beschriebene Verfahren kann auf dem Gerät bzw. dem Kommunikationspartner hardwaretechnisch und/oder softwaretechnisch auf einem oder mehreren Prozessoren implementiert sein. Bei einer hardwaretechnischen Implementierung kann ein Verfahrensschritt auf einer oder auch auf mehreren Hardwarekomponenten, beispielsweise auf mehreren Mikroprozessoren ausgebildet sein. Bei einer softwaretechnischen Implementierung kann das Verfahren durch ein Computerprogrammprodukt, als eine Funktion, als eine Routine, als Teil eines Programmcodes oder als ausführbares Objekt ausgebildet sein.

Ein Computerprogrammprodukt kann beispielsweise als Speichermedium, wie z. B. eine Speicherkarte, USB-Stick, CD-ROM, DVD oder auch in Form einer herunterladbaren Datei von einem Server in einem Netzwerk bereitgestellt oder geliefert werden.

Die nachfolgenden Ausführungsbeispiele weisen, sofern nicht anders angegeben, zumindest einen Prozessor und/oder eine Speichereinheit auf, um das Verfahren zu implementieren oder auszuführen.

Ausführungsbeispiele des erfindungsgemäßen Verfahrens sowie des Gerätes und des Kommunikationspartners sind in den Zeichnungen beispielhaft dargestellt und werden anhand der nachfolgenden Beschreibung näher erläutert. Es zeigen:
- Figur 1: ein erstes Ausführungsbeispiel des erfindungsgemäßen Verfahrens als Ablaufdiagramm;
- Figur 2: ein zweites Ausführungsbeispiel des erfindungsgemäßen Verfahrens mit weiteren Verbindungsschlüsseln für eine erste bzw. zweite Kommunikationsverbindung als Ablaufdiagramm;
- Figur 3: ein Ausführungsbeispiel des erfindungsgemäßen Gerätes in Blockdarstellung; und
- Figur 4: ein Ausführungsbespiel des erfindungsgemäßen Kommunikationspartners in Blockdarstellung.

In den Figuren sind Funktionsgleichelemente mit denselben Bezugszeichen versehen, sofern nichts anderes angegeben ist.

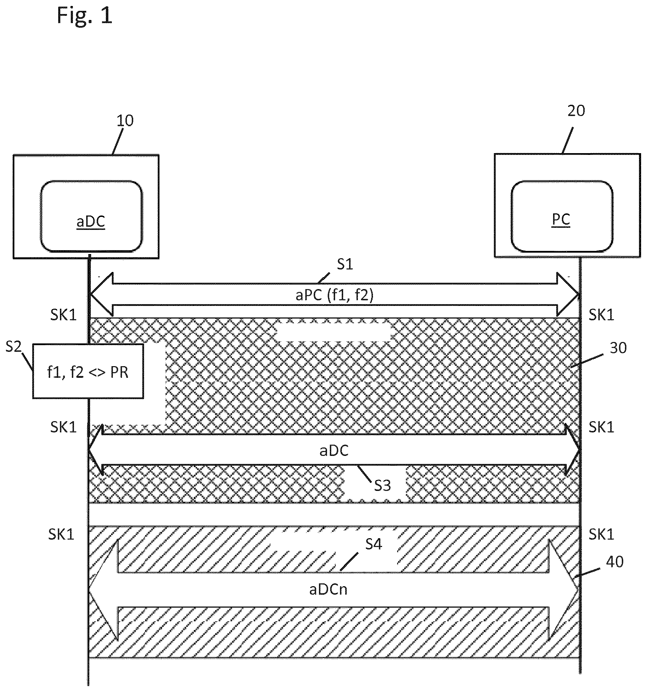

Figur 1 zeigt ein Gerät 10 sowie einen Kommunikationspartner 20. Das Gerät 10 umfasst einen Geräte-Authentisierungsnachweis aDC. Ein solcher Geräte-Authentisierungsnachweis aDC wird üblicherweise bereits bei der Herstellung oder bei der Inbetriebnahme vom Hersteller des Gerätes in das Gerät 10 eingebracht und dort üblicherweise geschützt und für einen Unbefugten sicher gespeichert. Ein solcher Geräte-Authentisierungsnachweis aDC ist beispielsweise ein Gerätezertifikat und/oder ein Geräteschlüssel, der zur Überprüfung von herstellerspezifischen Merkmalen des Gerätes und somit zum Nachweis der Authentizität des Gerätes verwendet wird. Der Geräte-Authentisierungsnachweis aDC kann auch zur Einrichtung eines Betreiber-Berechtigungsnachweises, beispielsweise bei der Inbetriebnahme des Gerätes durch einen Betreiber oder bei einem Einbringen des Gerätes 10 in eine Netzwerkumgebung verwendet werden. Dazu authentisiert sich das Gerät 10 z. B. mit einer Zertifikatanfrage oder über einen Zugriff auf einen Dienst, der auf einem beispielsweise Webserver bereitgestellt wird, mit dem Geräte-Authentisierungsnachweis aDC.

Der Kommunikationspartner 20 weist einen Kommunikationspartner-Authentisierungsnachweis aPC auf, mit dem sich der Kommunikationspartner 20 beim Gerät 10 authentisiert. Das Gerät 10 authentifiziert den Kommunikationspartner anhand des Kommunikationspartner-Authentisierungsnachweises aPC. Häufig wird dazu ein asymmetrisches Kryptoverfahren zu Authentifizierung verwendet und neben der Authentifizierung ein Verbindungsschlüssel zur Verschlüsselung von ausgetauschten Daten mit dem Kommunikationspartner 20 vereinbart.

Dabei sei angenommen, dass eine Seite, beispielsweise der Kommunikationspartner 20, einen "starken" Authentisierungsnachweis aPC aufweist. Die andere Seite, hier das Gerät 10, verfügt nur über einen möglicherweise "schwachen" asymmetrischen Authentisierungsnachweis aDC. Erfindungsgemäß verwendet das Gerät 10 seinen Geräte-Authentisierungsnachweis aDC gegenüber dem Kommunikationspartner 20 nur dann, wenn der vom Kommunikationspartner 20 verwendete Kommunikationspartner-Authentisierungsnachweis aPC vorgegebene Kriterien erfüllt. Der eigene Geräte-Authentisierungsnachweis aDC des Gerätes 10 kann insbesondere ein privater kryptografischer Schlüssel eines asymmetrischen kryptografischen Verfahrens wie beispielsweise gemäß Rivest, Shamir und Adleman (RSA) oder gemäß einem digitales Signaturalgorithmus (DSA, ECDSA) oder gemäß eines Post-Quanten-Kryptoverfahrens sein. Es können jedoch auch geheime kryptografische Schlüssel eines symmetrischen kryptografischen Verfahrens als Authentisierungsnachweis aDC, aPC verwendet werden.

In einem ersten Verfahrensschritt S1 baut das Gerät 10 eine kryptografisch geschützte erste Kommunikationsverbindung 30, basierend auf einer einseitigen Authentifizierung des Kommunikationspartners 20, abhängig von dem Kommunikationspartner-Authentisierungsnachweis aPC auf. Der Kommunikationspartner-Authentisierungsnachweis aPC umfasst dabei Authentisierungsparameter f1, f2. Es findet keine Authentifizierung des Gerätes 10 durch den Kommunikationspartner 20, beispielsweise einem Server, anhand des Geräte-Authentisierungsnachweises aDC statt, was der üblichen Aufbauprozedur entspräche.

In einem Verfahrensschritt S2 wird nun mindestens ein in dem Kommunikationspartner-Authentisierungsnachweis aPC enthaltener Kommunikationspartner-Authentisierungsparameter f1, f2 gegenüber einer vorgegebenen Parameterregel PR überprüft. Das Gerät 10 übermittelt seinen Geräte-Authentisierungsnachweis aDC nur dann zur Authentifizierung des Gerätes 10 über die Kommunikationsverbindung 30 an den Kommunikationspartner 20, wenn der mindestens eine überprüfte Kommunikationspartner-Authentisierungsparameter f1, f2 der vorgegebenen Parameterregel PR entspricht. Dies ist als Verfahrensschritt S3 in Figur gekennzeichnet.

Der Geräte-Authentisierungsnachweis aDC ist insbesondere ein digitales Zertifikat, das neben verschiedenen Informationen zum Gerät 10 selbst, wie dessen Seriennummer, Hersteller, Gerätetyp, auch einen kryptografischen Schlüssel enthält. Im Fall eines symmetrischen Verfahrens ist dies ein geheimer kryptografischer Schlüssel, der vorzugsweise in einer kryptographisch geschützten Datenstruktur enthalten ist, z.B. einem Kerberos-Ticket. Im Fall eines symmetrischen Verfahrens können beispielsweise Faktoren zur beidseitigen Schlüsselgenerierung beispielsweise nach einem Diffie-Hellmann-Verfahren, enthalten sein. Häufiger wird jedoch ein asymmetrisches Kryptoverfahren verwendet, sodass in dem Zertifikat der öffentliche Schlüssel des Gerätes 10 enthalten ist. Der Geräte-Authentisierungsnachweis aDC kann aber auch ein digitaler Geräteschlüssel, beispielsweise ein geheimer Schlüssel bzw. ein Authentisierungs-Ticket oder Authentisierungs-Token eines symmetrischen Verschlüsselungsverfahrens sein.

Bei der unilateralen also einseitigen Authentifizierung wird üblicherweise ein erster Verbindungsschlüssel SK1 zum Integritätsschutz und/oder zur Verschlüsselung der nachfolgend übertragenen Daten zwischen dem Gerät 10 und dem Kommunikationspartner 20 ausgehandelt und festgelegt.

Über diese erste Kommunikationsverbindung 30 wird nun der Geräte-Authentisierungsnachweis aDC übertragen, um beispielsweise anhand der im Geräte-Authentisierungsnachweis aDC enthaltenen Angabe zu Überprüfen, ob es sich tatsächlich um das vorgegebene Gerät 10 handelt.

Um nachfolgend weitere Daten zwischen dem Gerät 10 und dem Kommunikationspartner 20 zu übermitteln, wird eine kryptografisch geschützte zweite Kommunikationsverbindung 40 verwendet. Eine solche erste bzw. zweite Kommunikationsverbindung 30, 40 ist dabei jeweils über den zum Integritätsschutz verwendeten Verbindungsschlüssel charakterisiert. Für die zweite Kommunikationsverbindung 40 kann der erste Verbindungsschlüssel SK1 verwendet werden. In diesem Falle ist die erste Kommunikationsverbindung 30 und eine zur Übertragung der weiteren Daten verwendete zweite sichere Kommunikationsverbindung 40 identisch.

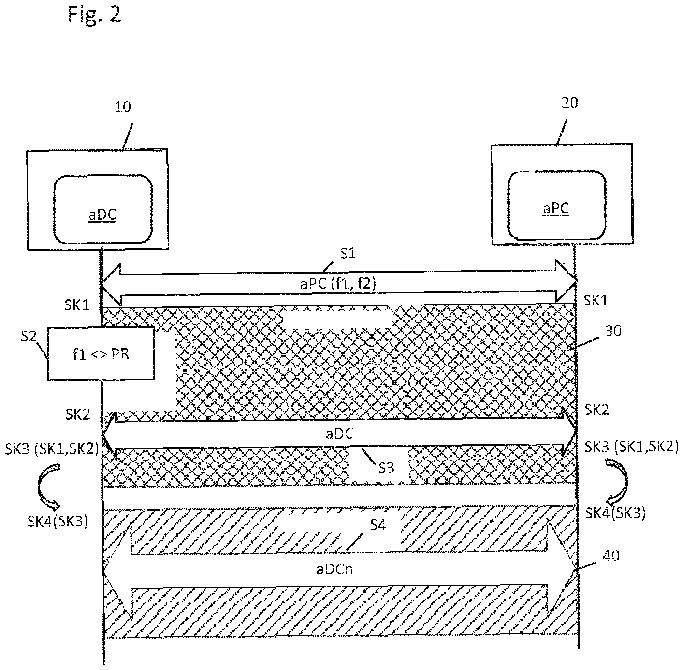

Es ist jedoch ebenso möglich, für die zweite Kommunikationsverbindung 40 einen zum ersten Verbindungsschlüssel SK1 unterschiedlichen weiteren Verbindungsschlüssel zu verwenden. Figur 2 verdeutlicht eine von mehreren Möglichkeiten diesen weiteren Verbindungsschlüssel für die kryptografisch geschützte zweite Kommunikationsverbindung 40 zu ermitteln.

In einer Variante wird nach der Überprüfung S2 der Kommunikationspartner-Authentisierungsparameter f1, f2 ein zweiter Verbindungsschlüssel SK2 zum kryptografischen Schutz der ersten Kommunikationsverbindung 30 in Gerät 10 und im Kommunikationspartner 20 festgelegt. Dies kann beispielsweise durch eine nochmalige Authentifizierung des Kommunikationspartners 20 und einer damit verbundenen erneuten Vereinbarung eines zweiten Verbindungsschlüssel SK2 durchgeführt werden.

In einer weiteren Variante wird nach der Überprüfung der Kommunikationspartner-Authentisierungsparameter f1, f2 ein dritter Verbindungsschlüssel SK3 zum kryptografischen Schutz der ersten Kommunikationsverbindung 30 im Gerät 10 und im Kommunikationspartner 20 durch Verknüpfen des zweiten Verbindungsschlüssels SK2 mit dem ersten Verbindungsschlüssel SK1 oder durch Verknüpfen des zweiten Verbindungsschlüssels SK2 mit einem aus dem ersten Verbindungsschlüssel abgeleiteten Schlüssel festgelegt. Somit ist ein sogenanntes "Channel-Binding" möglich, sodass die Authentifizierung des Gerätes explizit kryptografisch an den verwendeten ersten Tunnel, also die erste Kommunikationsverbindung 30 gebunden ist. Die kryptografisch geschützte zweite Kommunikationsverbindung 40 kann durch den in der kryptografisch geschützten ersten Verbindung 30 verwendeten ersten, zweiten oder dritten Verbindungsschlüssel SK1, SK2, SK3 geschützt werden. Diese Varianten sind nicht dargestellt.

Die kryptografisch geschützte zweite Kommunikationsverbindung 40 wird in Figur 2 durch einen vierten Verbindungsschlüssel SK4 geschützt, der aus den ersten und/oder dem zweiten und/oder aus dem dritten Verbindungsschlüssel SK1, SK2, SK3 abgeleitet ist.

Vor dem Übermitteln des Geräte-Authentisierungsnachweises aDC prüft das Gerät 10 des Weiteren, ob die erste Kommunikationsverbindung 30 vorgegebene Tunnelregeln erfüllt. Eine solche Tunnelregel ist beispielsweise die vom Kommunikationspartner 20 beim Aufbau des Tunnels 30 verwendete authentisierte Identität oder Gruppenzugehörigkeit des Kommunikationspartners, das ausgehandelte Verschlüsselungsverfahren bzw. Cipher Suite, die Anzahl der Router im Kommunikationspfad und/oder der gewählte Kommunikationspfad und die involvierten Router selbst.

Insbesondere kann als Parameterregel festgelegt werden, dass für die erste Kommunikationsverbindung ein Post-Quantengeeignetes Kryptoverfahren, z. B. New Hope, verwendet wird. Um ein Kommunikationsnetzwerk mit "Alt"-Geräten 20 dafür zu ertüchtigen, können über das beschriebene Verfahren folgende Schritte ausgeführt werden:

Zuerst wird im Kommunikationspartner 20 ein Post-Quantengeeignetes kryptografisches Verfahren implementiert oder dieses aktualisiert. Anschließend wird ein Kommunikationspartner-Authentisierungsnachweis aPC für den Kommunikationspartner 20 generiert. Des Weiteren wird eine aktualisierte Firmwareversion für das Gerät 10 erzeugt und beispielsweise in der zweiten Kommunikationsverbindung 40 an das Gerät 20 übermittelt. Die aktualisierte Firmware umfasst beispielsweise geänderte Parameterregeln, sodass das Gerät 10 seinen Geräte-Authentisierungsnachweis aDC lediglich über eine erste Kommunikationsverbindung 30 sendet, die den aktuellen Parameterregeln entspricht.

Somit können fortlaufend die Anforderungen an die erste Kommunikationsverbindung 30 den aktuellen Sicherheitsrichtlinien angepasst werden. Somit können Bedingungen, beispielsweise ein zulässiges Kryptoverfahren und Schlüssellängen des Kommunikationspartner-Authentisierungsnachweises aPC überprüft werden. Es ist nicht erforderlich, einen Geräte-Authentisierungsnachweis aDC des Gerätes 10 zu aktualisieren. Das Nachrüsten des Geräte-Authentisierungsnachweises aDC, insbesondere des entsprechenden Authentisierungsschlüssels, erfolgt aber nur für den Kommunikationspartner 20, sodass dieser ein "starkes" Authentisierungsverfahren, d.h. nach dem jeweils aktuellen Stand der Technik, verwenden kann.

Dies sind Schritte, die effizient erfolgen können, da nur ein einzelner Kommunikationspartner 20 und ein einzelnes Firmware-Image generiert werden müssen. Es ist jedoch nicht erforderlich, dass pro Geräteexemplar ein jeweils spezifischer Geräte-Authentisierungsnachweis aDC für einen beispielsweise Post-Quanten-Algorithmus generiert und sicher eingespielt werden muss. Trotzdem kann das Gerät 10 noch hinreichend sicher mit dem Kommunikationspartner 20 kommunizieren. Damit ist die Erfindung insbesondere vorteilhaft, um automatisch einen Post-Quanten-geeigneten Geräte-Authentisierungsnachweis auf dem Gerät 10 einzurichten. Dabei kann der vorhandene, eigentlich nicht mehr zeitgemäße Geräte-Authentisierungsnachweis aDC noch sicher verwendet werden, um einen aktualisierten neuen Geräte-Authentisierungsnachweis aDCn automatisch einzurichten. Dadurch kann das Verfahren bei installierten Geräten einfach verwendet werden.

Vor Freigabe eines aktualisierten Geräte-Authentisierungsnachweises aDC können weitere Kriterien geprüft werden. So kann der Geräte-Authentisierungsnachweis aDC nur genutzt werden, wenn die geräteeigene Firmware hinreichend aktuell ist. Dazu kann der aktuelle Firmware-Stand von einem Server abgefragt werden. Es kann aber auch lokal auf dem Gerät aDC unter Nutzung der lokalen Zeitinformation einer Echtzeituhr geprüft werden, wie alt die aktuelle Firmwareversion ist.

Die Nutzung des aktualisierten neuen Geräte-Authentisierungsnachweis aDCn kann beispielsweise nur nach einem Zurücksetzen des Gerätes 10 in den Ausgangszustand, einem sogenannten "Factory-Reset" oder nach Drücken eines Schalters oder Tasters, während eines begrenzten Zeitfensters erfolgen. Es kann des Weiteren geprüft werden, ob eine Kommunikationspartner-Identifizierungsinformation wie beispielsweise der DNS-Name, IP-Adresse oder die Uniform-Ressource-Link-Adresse URL, die bei der Geräteauthentifizierung innerhalb der ersten Kommunikationsverbindung verwendet wird, mit der beim Aufbau des ersten Tunnels 30 authentisierten Kommunikationspartneridentität übereinstimmt.

Des Weiteren kann nach erfolgter Nutzung des Geräte-Authentisierungsnachweises aDCN eine weitere Nutzung gesperrt werden oder die Anzahl der Nutzungen limitiert werden oder ein Zeitfenster, in dem der Geräte-Authentisierungsnachweis nach erfolgter Nutzung noch weiterhin nutzbar ist, festgelegt. Dadurch wird gewährleistet, dass ein als schwach geltender Geräte-Authentisierungsnachweis aDC nur noch begrenzt nutzbar ist, insbesondere um einen aktuell "starken" Ersatz-Geräte-Authentisierungsnachweis einzurichten.

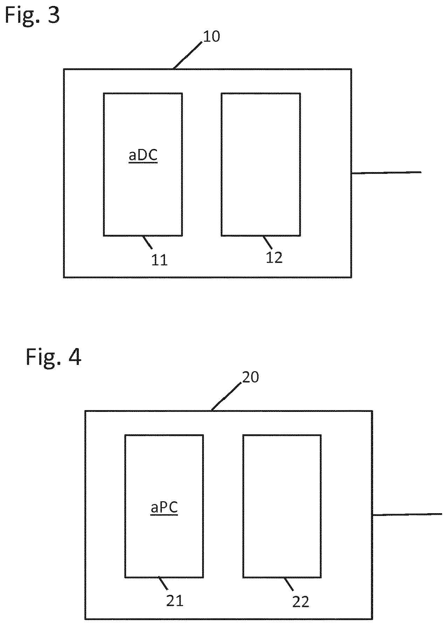

Figur 3 zeigt ein Gerät 10 in Blockdarstellung. Das Gerät umfasst eine Speichereinheit 11, die derart ausgebildet ist, den Geräte-Authentisierungsnachweis aDC sicher vor unbefugtem Zugriff dauerhaft zu speichern. Das Gerät 10 umfasst des Weiteren mindestens einen Prozessor 12, der derart ausgebildet ist, die beschriebenen Verfahrensschritte durchzuführen.

Figur 4 zeigt einen Kommunikationspartner 20 in Blockdarstellung. Der Kommunikationspartner 20 umfasst eine Speichereinheit 21, die derart ausgebildet ist, den Kommunikationspartner-Authentisierungsnachweis aPC sicher zu speichern. Der Kommunikationspartner 20 umfasst des Weiteren mindestens einen Prozessor 22, der derart ausgebildet ist, das Verfahren, wie beschrieben, durchzuführen.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Nutzungsbeschränkung eines Geräte-Authentisierungsnachweises (aDC) eines Gerätes (10) bei einem Verbindungsaufbau zu einem Kommunikationspartner (20), wobei das Gerät (10)
- eine erste kryptographisch geschützte Kommunikationsverbindung (30) basierend auf einer einseitigen Authentifizierung des Kommunikationspartners (20) abhängig von einem Kommunikationspartner-Authentisierungsnachweis (aPC) aufbaut (S1),
- mindestens einen in dem Kommunikationspartner-Authentisierungsnachweis (aPC) enthaltenen Kommunikationspartner-Authentisierungsparameter (f1, f2) gegenüber einer vorgegebenen Parameterregel (PR) überprüft (S2), und
- den Gerät-Authentisierungsnachweis (aDC) nur dann zur Authentifizierung des Gerätes (10) an den Kommunikationspartner (20) übermittelt (S3), wenn der mindestens eine überprüfte Kommunikationspartner-Authentisierungsparameter (f1, f2) der vorgegebenen Parameterregel (PR) entspricht.

2. Verfahren gemäß Anspruch 1, wobei der Geräte-Authentisierungsnachweis (aDC) ein Gerätezertifikat und/oder Geräteschlüssel ist, der zur Überprüfung von Herstellungsspezifischen Merkmalen des Gerätes (10), oder der zur Einrichtung eines Betreiber-Berechtigungsnachweises für einen Betreiber des Geräts (10) an den Kommunikationspartner (20) übermittelt wird.

3. Verfahren nach einem der vorhergehenden Ansprüche, wobei der Kommunikationspartner-Authentisierungsnachweis (aPC) ein asymmetrischer Authentisierungsnachweis des Kommunikationspartners (20) entsprechend einem asymmetrischen Kryptoverfahren ist.

4. Verfahren nach einem der vorhergehenden Ansprüche, wobei die erste kryptographisch geschützte Verbindung (30) entsprechend einem Post-Quantum-geeigneten Kryptoverfahren aufgebaut wird.

5. Verfahren nach einem der vorhergehenden Ansprüche, wobei das Gerät (10) mindestens einen ersten Verbindungsparameter der ersten kryptographisch geschützten Verbindung (30) gegenüber vorgegebenen Tunnelregeln überprüft, und den Geräte-Authentisierungsnachweis (aDC) nur dann zur Authentifizierung des Gerätes (10) an den Kommunikationspartner (20) übermittelt, wenn der mindestens eine ersten Verbindungsparameter den vorgegebenen Tunnelregeln entspricht.

6. Verfahren nach einem der vorhergehenden Ansprüche, wobei ein erster Verbindungsschlüssel (SK1) zum kryptographischen Schutz der ersten Kommunikationsverbindung (30) im Gerät (10) und im Kommunikationspartner (20) zur Übertragung des Geräte-Authentisierungsnachweis (aDC) festgelegt wird, wobei der erste Verbindungsschlüssel (SK1) bei der vorangehenden einseitigen Authentifizierung des Kommunikationspartners (20) ermittelte wurde.

7. Verfahren nach einem der Ansprüche 1 bis 5, wobei ein zweiter Verbindungsschlüssel (SK2) zum kryptographischen Schutz der ersten Kommunikationsverbindung (30) im Gerät (10) und im Kommunikationspartner (20) festgelegt wird.

8. Verfahren nach Anspruch 6, wobei ein dritter Verbindungsschlüssel (SK3) zum kryptographischen Schutz der ersten Kommunikationsverbindung (30) im Gerät (10) und im Kommunikationspartner (20) unter Verwendung eines aus ersten Verbindungsschlüssel (SK1) abgeleiteten Schlüssels festgelegt wird.

9. Verfahren nach einem der Ansprüche 6 bis 8, wobei eine kryptographisch geschützte zweite Verbindung (40) durch den in der kryptographisch geschützten ersten Verbindung (30) verwendeten erste, zweite oder dritte Verbindungsschlüssel (SK1, SK2, SK3) geschützt wird oder durch einen vierten Verbindungsschlüssel (SK4) geschützt wird, und der vierte Verbindungsschlüssel (SK3) aus dem zweiten Verbindungsschlüssel (SK2) abgeleitet oder aus dem ersten Verbindungsschlüssel (SK1) und eine weiteren Verbindungsschlüssel (SK5) abgeleitet ist.

10. Verfahren nach Anspruch 9, wobei das Gerät über die kryptografisch geschützte zweite Verbindung eine aktualisierte Parameterregel vom Kommunikationspartner empfängt.

11. Verfahren nach Anspruch 9, wobei über eine kryptographisch geschützte zweite Verbindung (40) ein aktualisierter Geräte-Authentisierungsnachweis (aDCn) an den Kommunikationspartner (20) übermittelt wird (S4).

12. Verfahren nach Anspruch 11, wobei das Gerät (10) den aktualisierten Geräte-Authentisierungsnachweis (aDCn) nur dann akzeptiert und als Geräte-Authentisierungsnachweis verwendet, wenn vorgegebene Nutzungsbedingungen, die durch das Gerät (10) selbst oder durch den Kommunikationspartner (20) überprüft werden, erfüllt werden.

13. Gerät mit einer Nutzungsbeschränkung eines Geräte-Authentisierungsnachweis (aDC) eines Gerätes (10) bei einem Verbindungsaufbau zu einem Kommunikationspartner (20), mit mindestens einem Prozessor, der derart ausgebildet ist,
- eine erste kryptographisch geschützte Kommunikationsverbindung (30) basierend auf einer einseitigen Authentifizierung des Kommunikationspartners (20) abhängig von einem Kommunikationspartner-Authentisierungsnachweis (aPC) aufbaut (S1),
- mindestens einen in dem Kommunikationspartner-Authentisierungsnachweis (aPC) enthaltenen Kommunikationspartner-Authentisierungsparameter (f1, f2) gegenüber einer vorgegebenen Parameterregel (PR) überprüft (S2), und
- den Gerät-Authentisierungsnachweis (aDC) nur dann zur Authentifizierung des Gerätes (10) an den Kommunikationspartner (20) übermittelt (S3), wenn der mindestens eine überprüfte Kommunikationspartner-Authentisierungsparameter (f1, f2) der vorgegebenen Parameterregel (PR) entspricht.

14. Kommunikationspartner, der derart ausgebildet ist das Verfahren gemäß einem der Ansprüche 1 bis 12 durchzuführen.

15. Computerprogrammprodukt, umfassend ein nicht vorübergehendes Computerlesbares Medium, das direkt in einen Speicher eines digitalen Computers ladbar ist, umfassend Programmcodeteile, die dazu geeignet sind, die Schritte des Verfahrens nach einem der Ansprüche 1 bis 12 durchzuführen.
